# EUROPEAN PATENT APPLICATION

(11) **EP 3 835 735 A1**
(43) Date of publication of application: **16.06.2021**
(21) Application number: 20213029.0
(22) Date of filing: 10.12.2020
(51) Int. Cl.: G01F 15/00

(54) **DEVICE FOR REGULATING THE PASSAGE OF THE GAS**

(30) Priority: 12.12.2019 IT 201900023772
(71) Applicant: Pietro Fiorentini S.p.A., 36057 Arcugnano (VI) (IT)
(72) Inventor: MEME', Lorenzo, 20088 ROSATE (MI) (IT); CARLET, Michele, 20088 ROSATE (MI) (IT); BARILATI, Luca, 20088 ROSATE (MI) (IT)
(74) Representative: Braidotti, Andrea

(57) **Abstract**

Device (1) to regulate the passage of gas, of the type suitable for being completely inserted and housed inside the casing (2) of a single gas meter (3) capable of managing a maximum gas flow rate equal to or greater than 16 m³/h, in order to intercept, at least in part, the gas flow at the gas inlet (5) in said meter and/or at the gas outlet (4) in/from said meter, said device comprising:
- a connecting element (11) which is provided with an opening configured to be fluidically connectable, preferably sealed, with said gas inlet (5) and/or with said gas outlet (4) in/from said meter (3), and which is also provided with at least two passages (14) fluidically connected, in parallel with each other, to said opening,
- at least two valves (12) fluidically arranged in parallel with each other, each of said at least two valves (12) being mounted in correspondence with one of said at least two passages (14) and being provided with an electric actuator (17) configured to cause the opening/closing of the corresponding valve,
- an electronic apparatus (20) which is electronically connected with the actuator (17) of each valve (12) to control the movement of said actuator, and therefore the opening/closing of the corresponding valve, said electronic apparatus (20) comprising an electronic control unit (21) which is configured to command and time the opening/closing of said at least two valves (12)
and characterized in that:
- said connecting element (11) is configured to support said at least two valves (12) in a suspended condition inside the meter (3), and
- each of said at least two valves (12) is an interception valve having a passage section of about 250-400 mm².

## Description

The present invention relates to a device for regulating the passage of gas, and in particular of the type suitable for being inserted and housed inside the casing of a gas meter in order to intercept, at least in part, the flow of gas at the gas inlet and/or outlet in said meter.

At present, a single gas flow shut-off solenoid valve is generally provided inside the casing of a gas meter and in correspondence with its inlet section, a solenoid valve that is suitably chosen and sized according to the maximum flow rate of the gas managed by the meter itself. Conveniently, this solenoid valve is used to intercept the flow of gas to the outlet for commercial and service purposes only, in particular to interrupt, at the discretion of the distributor and by local or remote control, the supply of gas, for example in the case of default by the user.

Conveniently, an electronic circuit is also provided in the meter to control/command the movement of the moving part of the solenoid valve, and therefore the opening and closing of the latter, as well as to detect its state (open/closed) and the its correct functioning. In particular, the mechanical actuation for opening/closing the solenoid valve is performed by an actuator electrically controlled by said electronic circuit.

Currently, even the gas meters that are generally used for industrial or condominium users, and which are therefore configured to manage particularly high maximum gas flow rates (i.e. greater than or equal to 16 m³/h), are internally equipped with a single/unique interception solenoid valve which is suitably sized from a mechanical point of view and, moreover, a corresponding electronics suitable for its piloting is provided. More in detail, providing for the use of a single solenoid valve with a larger passage section, it is also necessary to increase the size of the mobile element (shutter) to be moved in order to close this passage section of the valve, thus requiring an increase also of the power supplied by the electronic circuit which is necessary to cause the movement of the mobile element.

However, the known solutions are not optimal, in particular in the case of particularly high maximum gas flow rates, since the pressure absorption is too high for the meter with a single solenoid valve to fall within the normal limits.

Furthermore, in order to be able to use a commercial solenoid valve of the type generally available on the market inside meters that manage particularly high gas flow rates, it is necessary to intervene in an important way on the mechanical characteristics (both in terms of shape and size) of said solenoid valve, as well as it is necessary to intervene on the size/dimension of the batteries and on the characteristics of the electronic piloting circuit in order to guarantee the correct movement of the moving part that causes the valve to open/close. In this regard, there is often the need to modify the printed electronic circuit board (PCB) in order to manage a different and dedicated hardware component, for example by inserting an "H bridge" to power the electromechanical actuator or an equivalent transduction circuit of the movement control, one or more current sensing circuits for the evaluation of the current absorption by the actuator, any limit switches, passive and/or active protection elements to ensure correct operation in potentially explosive areas, energy storage elements to ensure correct operation in all operating modes and with different current sources.

US2012/085434 discloses an apparatus for controlling the flow of fluids which comprises an inlet pipe which is connected to a collector pipe provided with three outlets in parallel; each of these three outlets is provided with a control valve and is fluidically connected downstream with a corresponding and dedicated meter, which is distinct and separate from those connected respectively to the other two outlets. The apparatus also comprises a central processing and control unit which is electronically connected with the three valves each positioned in correspondence with one of said three outputs in parallel with each other.

In particular, therefore, the apparatus of US2012/085434 is of the type to be positioned externally and at the inlet of separate gas meters in parallel with each other. More in detail, the apparatus of US2012/085434 acts as a traditional choke of the incoming flow between several meters in parallel.

The object of the invention is to propose a device for regulating the passage of gas, of the type to be installed inside the body of a gas meter, which allows to overcome the drawbacks of the known solutions.

Another object of the invention is to propose a device which is highly versatile, and which in particular can be easily configured and adapted to manage various gas flow rates.

Another object of the invention is to propose a device which is particularly suitable for being installed and used in a gas meter with high flow rates, in particular equal to or greater than 16 m³/h.

Another purpose of the invention is to propose a device that can be installed inside the casing of a gas meter and that at the same time causes a minimum pressure drop, or in any case in line with the provisions of the law, of the gas flow running through it.

Another purpose of the invention is to propose a device that can be used to regulate the passage of the gas in case of maximum flow rates of the gas itself equal to or greater than 16 m³/h, without substantially modifying, from the point of hardware view, the piloting electronics that are generally used for a single shut-off valve used in meters that manage maximum gas flow rates below 16 m³/h, in particular, equal to or below 10 m³/h.

Another object of the invention is to propose a device which uses mechanical components, and in particular valves, which are already currently available.

Another object of the invention is to propose a device that uses electronic components already available at present, thus avoiding their new and/or dedicated production.

Another object of the invention is to propose a device which allows a precise regulation of the gas passage.

Another object of the invention is to propose a device which requires low quantities of energy for its operation, and which in particular optimizes the electrical energy required for its operation.

Another object of the invention is to propose a device which is highly safe and reliable, as well as which has a duration of at least 15 years.

Another object of the invention is to propose a device which allows to control in on/off mode and/or to modulate the flow of gas that passes through it.

Another object of the invention is to propose a device which can be obtained simply, quickly and with low costs.

Another object of the invention is to propose a device which is an improvement and/or alternative to the traditional ones.

Another object of the invention is to propose a device which has an alternative characterization, both in constructive and functional terms, with respect to traditional ones.

Another object of the invention is to propose a device, and a corresponding gas meter incorporating said device, which are in line with the regulations in force in the sector.

All the objects mentioned here, considered both individually and in any combination thereof, and others which will result from the following description, are achieved, according to the invention, with a device as defined in claim 1 and with a gas meter as defined in claim 14.

The present invention is further clarified hereinafter in some of its preferred embodiments reported for purely illustrative and non-limiting purposes with reference to the attached drawings, in which:
- Figure 1: shows a perspective view of a meter at inside of which a device according to the invention is inserted,
- Figure 2: shows a perspective view of a meter, without its containment casing, with the device according to the invention applied at the entrance,
- Figure 3: shows a side view of a meter, without its containment casing, with the device according to the invention a applied at the entrance,
- Figure 4: shows in perspective view only the device of figures 2 and 3,
- Figure 5: shows a meter, without the upper half-shell of the containment casing, and inside which a further embodiment of the device according to the invention is inserted applied to the entrance,
- Figure 6: shows in perspective view the device provided in fig. 5,
- Figure 7: shows a second side view of the device provided in fig. 5,
- Figure 8: shows a partially sectioned front view of the device of Fig. 6 (and in which the actuator of a single valve is represented),
- Figure 9: shows a perspective view of a meter, without its containment casing, with the device according to the invention applied at the outlet,
- Figure 10: shows a side view of a meter, without its containment casing, with the device according to the invention applied at the outlet,

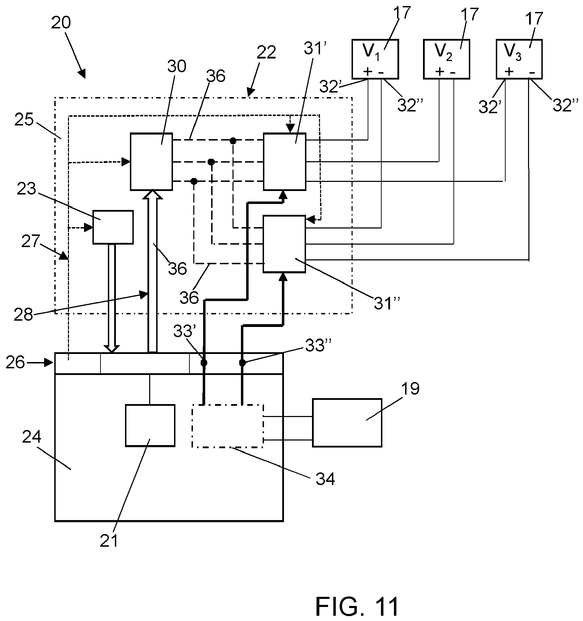

- Figure 11: shows a schematic view of the electronic apparatus of the device according to the invention,
- Figure 12a: shows a graph of the driving current Ip which over time is supplied to the valves of the device according to a first driving mode ("sequential" type),
- Figure 12b: shows a table in which, for each instant in time, the percentage of current is indicated and the percentage of closure of each valve of the device, according to the first piloting mode of fig. 12a,
- Figure 13a: shows a graph of the driving current Ip which over time is supplied to the valves of the device according to a second driving mode (of the "Time Division Multiplexing" type),
- Figure 13b: shows a table in which, for each instant time, the percentage of driving current and the percentage of closure of each valve of the device are indicated, according to the second driving mode of fig. 13a,
- Figure 14a: shows a graph of the driving current Ip which over time is supplied to the valves of the device according to a third driving mode (of the "Pulse Width Mudulation" type),
- Figure 14b: shows a table in which, for each instant time, the percentage of driving current and the percentage of closure of each valve of the device are indicated, according to the third driving mode of fig. 14a.

The present invention relates to a device 1 for regulating the passage of gas, and is of the type suitable for being completely inserted and housed inside the casing 2 of a gas meter 3 to thus intercept, at least in part, the gas flow at the gas inlet 5 and/or the gas outlet 4 in said meter.

In particular, the device 1, being housed inside the casing 2 of a single meter 3, is provided and is of the type suitable to be used inside the same and single meter 3, and is therefore not of the type to be positioned externally to several gas meters in parallel with each other so as to act as a choke of the flow between said meters.

In particular, the gas meter (or measurer) 3 is of the type configured to perform a series of measurements on the gas which passes through said meter. Preferably, the gas meter 3 is of the type generally used as a meter or meter for the flow of gas which passes through the section of a pipe on which said measurer is installed.

Conveniently, the meter 3 is provided with a containment casing 2 provided with a gas inlet 5 and a gas outlet 4.

Preferably, in the containment casing 2 the following are defined and/or mounted:
- an inlet connection 7 which is fluidically connectable with an upstream tube external to the meter 3,
- an outlet connection 6 which is fluidically connectable to a downstream pipe external to the meter 3.

Conveniently, the meter 3 is provided with a gas inlet section 9 which is housed inside the containment casing 2 and which is fluidically in connection with the inlet connection 7 to allow the gas to enter the casing 2.

Conveniently, the meter 3 is provided with a gas outlet section 8 which is housed inside the containment casing 2 and which it is fluidically connected to the outlet connection 6 to allow the gas to exit the containment casing 2 of the meter.

Conveniently, the inlet 5 is in fluidic connection with the inlet connection 7 and/or with the inlet section 9. Conveniently, the outlet 4 is in fluidic connection with the outlet connection 6 and/or with the outlet section 8.

Conveniently, the containment casing 2 is watertight to prevent the escape of gas to the outside. Preferably, it is made up of two or more parts (for example half-shells) joined together so as to guarantee the hermetic seal of the entire casing. Preferably, the containment casing 2 is made of metal, in particular of metal sheet.

The meter 3 comprises a measurement module, indicated as a whole with the reference number 10, which is housed inside the containment casing 2, in particular it is housed inside the chamber bounded by the internal walls of said casing 2.

Conveniently, the measurement module 10 is of the conventional type and comprises at least one sensor, preferably a plurality of sensors which are configured to detect corresponding quantities of the gas flow entering and passing through the meter 3.

Preferably, the sensors comprise a corresponding sensor for detecting the flow rate, pressure and temperature of the gas entering and/or passing through the meter 3. The sensor or sensors are traditional in themselves and, therefore, will not be described further.

Conveniently, the sensor of the measurement module 10 can comprise a flow sensor of the membrane type which comprises a traditional mechanical system (for example comprising a crank mechanism connected to a pin) which is associated with a detection system (encoder and optical sensors) and conversion into electronic pulses; in particular, the mechanical system alone or both of said systems can be provided inside the casing 2 and, moreover, suitably, the detection and conversion system can be connected to a corresponding electronic calculation and management which is provided outside of the casing 2 of the meter 3.

Conveniently, the sensor of the measurement module 10 can comprise an ultrasonic or thermo-mass sensor.

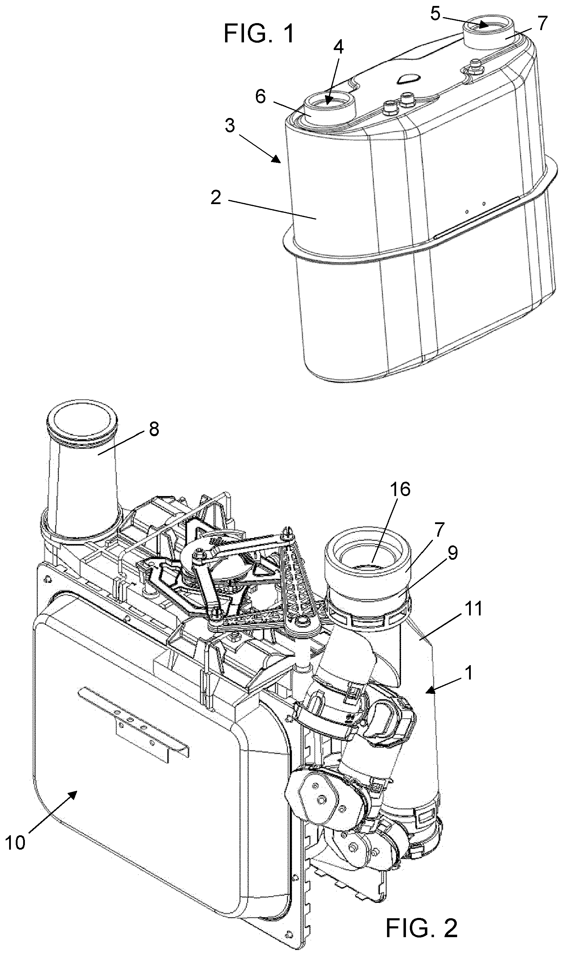

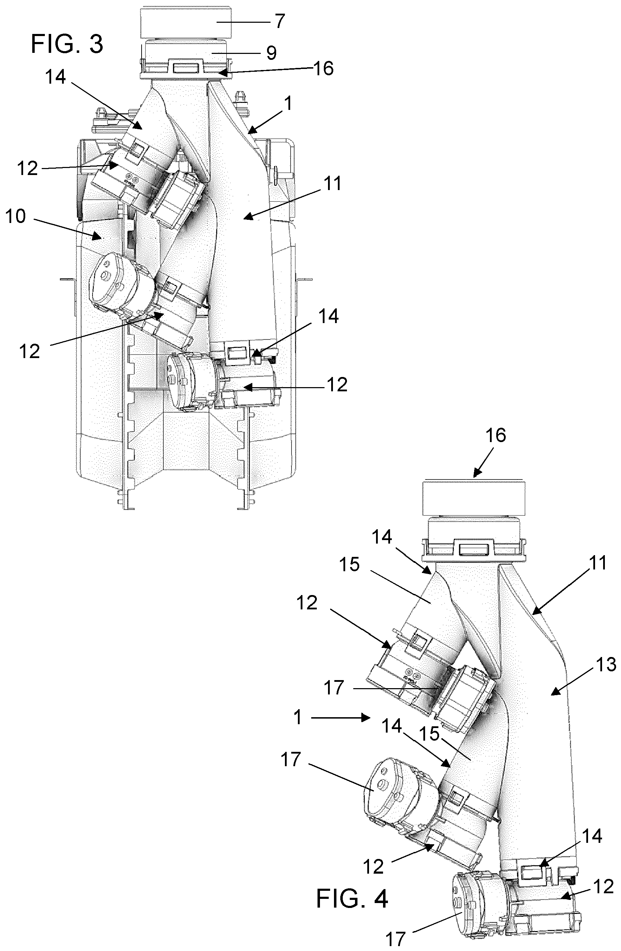

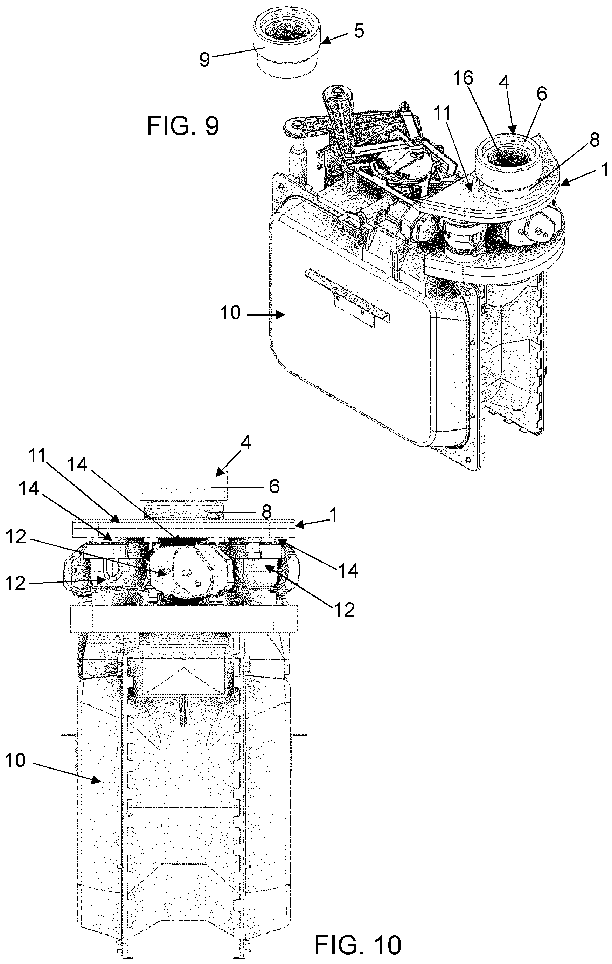

Conveniently, a device 1 according to the invention is housed inside the casing 2, which can be connected to the input 5 inside the meter 3 (see fig. 1-3, 5) and/or to the output 4 of the gas from meter 3 (see Figs. 9 and 10), to thus regulate the passage of gas that enters and/or exits from the casing 2 of the meter 3. Preferably, the device 1, housed inside the casing 2 of the meter 3, can be connected tightly to the gas inlet 5 and/or to the gas outlet 4.

In particular, as shown in figs. 1-3 and 5, the device 1 can be installed in correspondence with the inlet connection 7 and/or the inlet section 9 to thus regulate the passage of the gas which enters the chamber defined inside from the inlet 5 of the meter 3 of the casing 2. Conveniently, as shown in Figures 9 and 10, the device 1 can be installed in correspondence with the outlet connection 6 and/or the outlet section 8 to thus regulate the passage of gas from the chamber defined to the inside the casing coming out of the meter 3.

Basically, the device 1 according to the invention intercepts and regulates - preferably in on-off mode - at the inlet and/or outlet of the meter 3, the flow of gas that crosses the internal chamber of the meter itself and/or protruding from the latter towards the outside of the meter.

Preferably, the device 1 is configured to be inserted and housed inside a gas meter 3 capable of managing a maximum flow rate (ie the flow rate at which the meter can still operate indefinitely without deteriorating either under the metrological aspect or under the constructive one) equal to or greater than 16 m³/h, i.e. a meter designed for industrial users or condominiums. Preferably, said gas meter 3 is of class G10 or higher.

Suitably, the device 1 according to the invention comprises a connecting element 11 which is provided with:
- an opening 16 configured to be fluidically connectable, preferably sealed, with said gas inlet 5 and/or with said gas outlet 4 in/from said meter 3,
- at least two passages 14 which are fluidically connected, in parallel with each other, to said opening 16.

The device 1 comprises at least two valves 12 fluidically arranged in parallel with each other and each of said valves 12 is mounted in correspondence with one of said at least two passages 14 and is provided with an electric actuator 17 configured to cause the opening/closing of the corresponding valve.

In particular, the connecting element 11 comprises within it a common manifold 13, which is internally hollow, and which can be connected with the inlet section 9, to receive the gas which enters the meter 3, or it can be be connected to the outlet section 8, to cause the gas that has circulated inside the meter to escape outside the meter 3.

Conveniently, said at least two passages 14, in parallel with each other, are defined by openings made in the manifold 13 and/or by ducts 15 associated with said manifold. A corresponding valve 12 is mounted in correspondence with each passage 14.

Conveniently, the valves 12 of the device 1 are therefore housed inside the containment casing 2 of a single/same meter 3. In particular, the device 1 it is installed and housed inside the containment casing 2 of a single/same meter 3 so that all the valves 12 of said device are located upstream or downstream of the same and unique measurement module 10 with which the meter is provided 3.

Conveniently, the connecting element 11 is configured to support said at least two valves 12. Advantageously, said at least two valves 12 are mounted on said connecting element 11, preferably by means of the respective ducts 15, so as to be thus supported/hanging inside the casing 2 of the meter 3.

Conveniently, in the case of connecting the connecting element 11 to the inlet port 7, the gas which enters from the latter at the opening 16 passes through the manifold 13, which thus distributes it between the various passages 14. Conveniently, in the case of connection of the connecting element 11 to the outlet connection 6, the gas present and circulating inside the containment envelope 2 of the meter 3 enters through the passages 14, is collected in the manifold 13 which, through the opening 16, then sends it to the outlet connection 6.

More in detail, as mentioned, said at least two valves 12 are arranged in parallel from the fluid-dynamic point of view and are each mounted in correspondence with a respective passage 14; suitably, each passage 14 is fluidically connected - and separately from the other passages - with the manifold 13 defined in/by said connecting element 11.

Preferably, the common connecting element 11 is fluidly connected to one or more of said at least two valves 12 by means of respective ducts 15 that depart from the manifold 13. Preferably, in this case, the valve 12 is mounted on the respective duct 15 at the termination/end of the duct itself which is opposite to that connected to the manifold 13. Preferably, the common connecting element 11 can be fluidly connected to one or more of said at least two valves 12 by means of respective passage openings defined on a base and/or side wall of the manifold 13. In particular, in this case, the valve 12 is mounted on a passage opening defined on a wall of the manifold 13.

Preferably, the manifold 13 can have a duct conformation, or with however substantially tubular (cf. embodiment of fig. 2 - 4). In particular, in this case, the tubular manifold 13 develops in length (or in any case mainly in length and much less radially), i.e. according to a direction parallel or slightly inclined with respect to the longitudinal direction of development of the inlet section 9 and/or of the outlet section 8 (ie according to a direction corresponding to the height of the meter 3 in which the device 1 is inserted).

Conveniently, in this case, two or more ducts 15 branch off separately and in sequence from the side wall of the tubular manifold 13 - along the longitudinal development of said tubular manifold - and, moreover, a valve 12 is mounted at the end of each duct 15. Preferably, the manifold 13 is defined in a single piece with said at least two ducts 15 or the latter are sealed connected to said manifold 13.

Preferably, in the case of a tubular manifold 13, a valve 12 can also be mounted at the end of the tubular manifold, an end which is opposite to that which is fluidically connected with the inlet 9 and/or outlet section 8.

Conveniently, the tubular manifold 13 can comprise two or more consecutive tubular portions which, preferably, can be straight and/or curves and/or can be aligned and/or can be inclined to each other so as to define a manifold 13 which defines a path/development which is optimal in terms of overall dimensions inside the containment casing 2, and this also with respect to the remaining components (for example of the measuring module 10) housed in said casing.

Advantageously, to optimize the space occupied inside the containment casing 2, the ducts 15 of the connecting element 11 depart at an angle/inclined with respect to the direction of development of the manifold 13. Preferably, the ducts 15 develop to define a lower angle of 90° with respect to the direction of development of the corresponding portion of the tubular manifold 13 from which they depart. Advantageously, to optimize the space occupied inside the containment casing 2, the ducts 15 of the connecting element 11 branch out in a curved way with respect to the direction of development of the manifold 13.

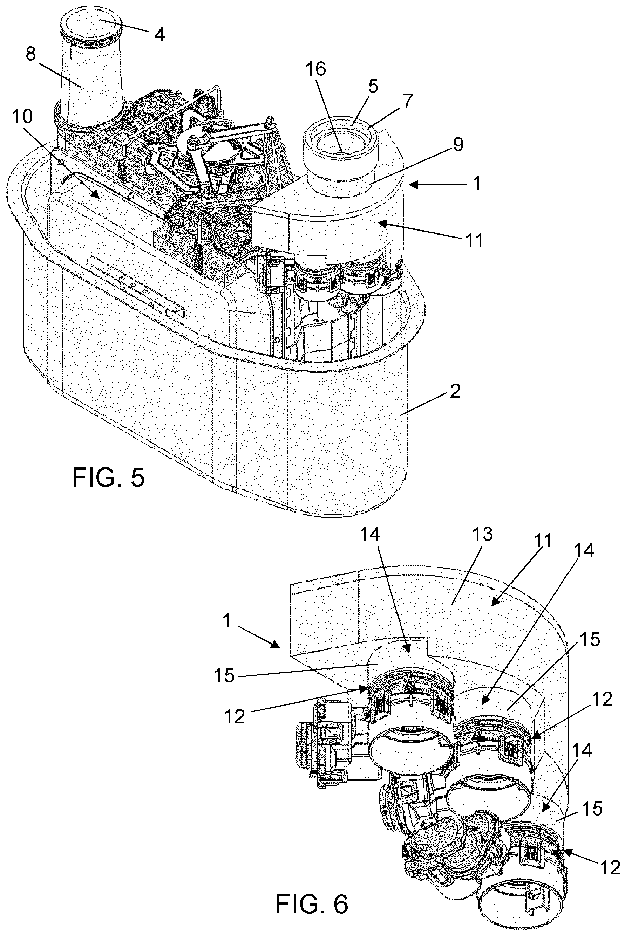

Alternatively, the manifold 13 can have a box-like shape or truncated, or in any case it can also develop radially (see embodiment of fig. 5-7), i.e. along directions defining the cross-section of the inlet 9 and/or outlet 8 (i.e. according to a direction corresponding to the length and/or or width of the meter 3 in which the device 1 is inserted).

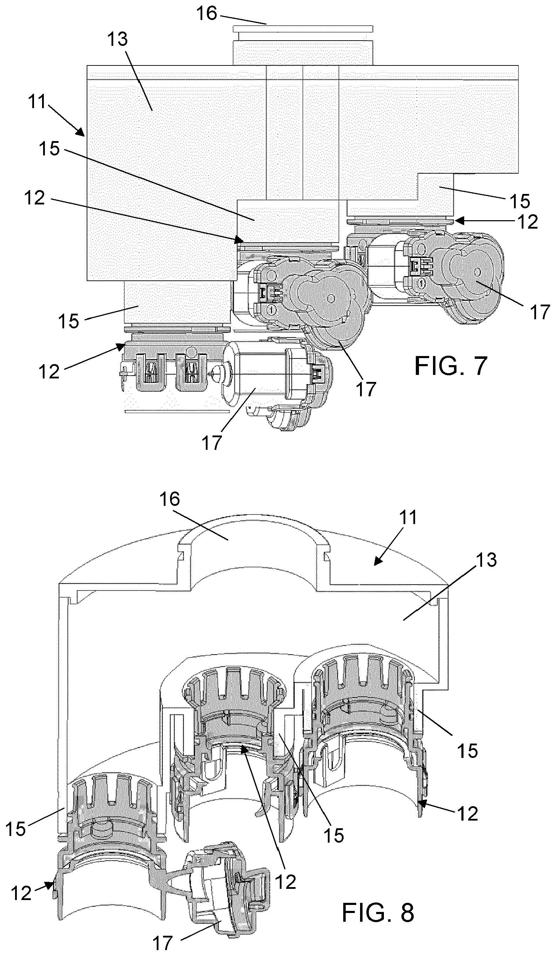

Preferably, in this case, the passages 14 (i.e. the openings/ducts) in correspondence with which the valves 12 are mounted are provided at the bottom wall of the manifold 13, the bottom wall which faces the one in which the opening 16. Preferably, the bottom wall can have a stepped conformation (see fig. 7).

Preferably, the ducts 15 in which the valves 12 are installed/mounted can have the same or different length from each other.

Preferably, the ducts 15 in which the valves 12 are installed/mounted all have the same passage cross section.

Preferably, each of said at least two valves 12 is a traditional shut-off valve which is provided alone in a gas meter 3 capable of managing maximum flow rates which are equal to or less than 10 m³/h. Conveniently, each of said at least two valves 12 is a traditional shut-off valve which is provided alone in a G4 or G6 class gas meter 3.

In particular, each of said at least two valves 12 has a passage section of about 250-400 mm².

Preferably, each of said at least two valves 12 is two-way, ie with an inlet and an outlet.

Preferably, all the two or more valves 12 of the device 1 are equal to each other. In particular, said at least two valves 12 are of the same type. Preferably, said at least two valves 12 have substantially the same diameter as the respective cross section of the passage 14 in which they are mounted/installed. Conveniently, the passage cross section 14 of the valve 12 substantially corresponds to that of the duct 15 or of the opening in which the valve itself is installed.

Conveniently, in the device 1 according to the invention, each of the valves 12 - considered individually - would therefore be unsuitable for withstanding the pressure and flow rate envisaged in meters suitable for managing a maximum flow rate equal to or greater than 16 m³/h. However, by connecting several valves 12 in parallel to the same connecting element 11, the total flow rate of the inlet gas is distributed among all the valves 12 and, therefore, each of the valves only manages a fraction of said total flow rate.

Conveniently, the connecting element 11 (comprising the manifold 13 with the passages 14) is sized and shaped in such a way as to minimize its overall dimensions inside the containment casing 2 and also in such a way as to minimize drops in the pressure of the gas running through it. In particular, in order to minimize the pressure drops of the gas passing through the connecting element 11, the latter minimizes the changes in the direction of the gas flow and optimizes the distribution of the flow through the passages 14 on which the corresponding valves 12.

In particular, the connecting element 11 is sized and shaped so as to manage a maximum gas flow rate equal to or greater than 16 m³/h. Advantageously, the connecting element 11 is sized and shaped in such a way as to ensure compliance with the pressure absorption limits provided for by the reference standards for gas meters (such as in particular EN1359, EN14236 and EN11265). Conveniently, each valve 12 of the device 1 comprises a movable member whose movement allows/prevents and/or regulates the flow of gas that crosses the passage section of the valve itself. In particular, the movement of the movable member is controlled by an electric or electromechanical actuator 17, which can be a solenoid or a motor, preferably a direct current motor. Conveniently, said at least two valves 12 are solenoid valves.

Conveniently, each valve 12 of the device 1 can therefore assume a closed condition in which the movable member of the valve prevents the gas from passing through the passage section of the valve itself, and at least one opening condition in which the gas passes through the passage section of the valve itself. In particular, the actuator of each valve is able to move the corresponding mobile member of the valve between a closed position of the passage section of the valve itself, and at least one opening position of the passage section of said valve.

Conveniently, in a possible embodiment, at least one of said valves 12 can be of the "on/off" type (ie with fixed flow rate), ie it is configured to assume only a condition of complete closure of the passage section and a condition of complete opening of the passage section, ie without being able to stably assume one or more intermediate positions of partial opening of the passage section.

Advantageously, in a possible embodiment, at least one of said valves 12 can be configured to stably assume one or more intermediate conditions of partial opening of the passage section, thus allowing to regulate the passage lumen and therefore to regulate the flow rate.

Said two or more valves 12 are electronically connected and commanded in opening/closing by the same electronic apparatus 20. In particular, the electronic apparatus 20 is electronically connected with the actuator 17 of each valve 12 to control the movement of said actuator, and then the opening/closing of the corresponding valve.

Conveniently, the electronic apparatus 20 comprises an electronic control unit 21 which is configured to control and time the opening/closing of said at least two valves 12.

Conveniently, the electronic apparatus 20 also comprises a power supply unit 19 for supplying the electrical energy (driving current) for opening and closing each valve 12.

Conveniently, the electronic apparatus 20 also comprises an interface module 22; in particular, this interface module 22 is connected at the input with the control unit 21 and with the power supply unit 19, and at the output with the electric actuator 17 of each of said at least two or more valves 12.

Conveniently, the electronic apparatus 20 comprises an electronic circuit 24
- preferably defined in a first electronic board (in particular in a first printed circuit)
- on which the electronic control unit 21 is mounted/connected and on which the power supply unit 19 is mounted/connected.

Advantageously, the electronic circuit 24 and the power supply unit 19 of the electronic apparatus 20 are suitable for controlling a single valve 12 and, in particular, they are of the same type provided for controlling a single valve.

Preferably, also the electronic control unit 21 is of the same type provided for controlling a single valve, varying only the program (software) which is loaded in the electronic control unit 21 and which is suitably configured to control said at least two valves 12.

Suitably, the first electronic circuit 24 and the power supply unit 19 - and preferably also the electronic control unit 21 - electronic apparatus 20 are suitable for controlling the electric actuator 17 of the movable member handling of a single shut-off valve 12 which is generally of the type provided in gas meters capable of managing maximum flow rates that are equal to or less than 10 m³/h.

Conveniently, the interface module 22 is configured to control said at least two valves 12 by means of a first electronic circuit 24, an electronic control unit 21 and a power supply unit 19 which are suitable for (i.e. of the type envisaged for) controlling a single valve 12. In particular, the interface module 22 is configured to allow/interrupt, on the basis of control signals 36 generated and sent by said electronic control unit 21, the sending of the driving current supplied by said power supply unit 19 to at least one of said actuators 17 of said at least two valves 12.

In particular, the interface module 22 is connected at the input - advantageously by means of a single first electric cable 26, preferably a ribbon (ie flat cable), associated with the first circuit electronic 24 - with the electronic control unit 21 and with two electrical contacts 33' and 33" connected to the power supply unit 19.

Conveniently, the first electronic circuit 24 is also configured - for example by providing an "H bridge" circuit 34 - to invert the polarity at the two contacts 33' and 33", and thus allow the actuator to be moved in two opposite directions (in particular to allow the rotation of the motor in both directions, both clockwise and anticlockwise). Preferably, the command for reversing the polarity at the two electrical contacts 33' and 33" is sent by the control unit 21.

Conveniently, the power supply unit 19 comprises a battery pack which, preferably, is the same as provided for the power supply of the measuring module 10, but it could also be that provided for powering the communication module provided in the meter.

Conveniently, the interface module 22 is connected at the output with the two terminals 32' and 32" (positive and negative) of the actuator 17 of each of said at least two valves 12.

Preferably, the components of the interface module 22 are mounted on a second electronic card 25 which is distinct and separate from the first electronic card of the first electric circuit 24. Conveniently, the first card and the second electronic card are electrically connected by means of the first electric cable 26, to thus allow the transfer to the interface module 22 of the signals from the control unit 21 as well as for the passage of the driving current from the power supply unit 19 to each electric actuator 17.

Preferably, a temperature sensor 23 can be mounted on the second electronic board 25 which detects the gas temperature and sends the corresponding detection signals to the electronic control unit 21. Conveniently, this temperature sensor could also be housed on the first electric cable 26 or integrated in the valves themselves.

Alternatively, in a variant not shown, the electronic control unit 21 and the interface module 22 could also be implemented in the same printed electronic circuit, and thus be connected by means of electrical connections made on said printed circuit.

Conveniently, the electrical connection between the first electrical circuit 24 and the interface module 22 comprises a power supply bus 27, preferably with two lines, to power the electronic components of the interface module 22.

Conveniently, the electrical connection between the electronic unit control signals 21 and the interface module 22 comprises at least one communication bus 28 of the control signals 36 coming/generated by the control unit 21, preferably a serial communication bus. Preferably, the communication bus 28 of the control signals is of the I²C type, and in particular it comprises a line (SDA) for passing the data and a line (SCL) for the synchronization clock signal.

Advantageously, the module interface 22 comprises an input/output expansion unit 30 to increase the input/output capacity of the control unit 21. In particular, the input/output expansion unit 30 receives as input - via the communication bus 28 - the control signals 36 coming from the control unit 21 and multiplies them so as to output them to two selector circuits, respectively 31' and 31", preferably two analog demultiplexers.

In particular, a selector circuit 31' is configured to electrically connect - on the basis of the control signals 36 received from the input/output expansion unit 30 - one (ie the electrical contact 33') of said two electrical contacts associated with the supply unit 19 with the positive terminal 32' of an actuator 17 of said at least two valves 12, to thus cause the movement of said actuator in a first direction.

The other selector circuit 31" is configured to electrically connect - on the basis of the control signals 36 received from the input/output expansion unit 30 - the other (ie the electrical contact 33") of said two associated electrical contacts to the power supply unit 19 with the negative terminal 32" of an actuator 17 of said at least two valves 12, to thus cause the movement of said actuator in a second direction which is opposite to the first.

Basically, the selector circuits 31' and 31" are configured to divert and/or sort - on the basis of the control signals 36 coming from the control unit 21 and multiplied by the input/output expansion unit 30 - the driving current, coming from one of the two electric contacts 33' and 33" associated with the power supply unit 19, towards the terminals of the electric actuators 17 of said at least two valves 12, to thus cause the movement of the corresponding actuator in a first or second direction.

The electronic apparatus 20 is configured in such a way as to control the opening/closing of said at least two valves 12 of the device 1 - and in particular the movement of the respective moving members to cause the opening or closing of the corresponding passage sections of said at least two valves 12 - absorbing/requiring the same amount of driving current (and therefore of electrical energy) that is required, in a given time interval, for the opening/closing of a single valve. In particular, the electronic apparatus 20 is configured in such a way that, in order to cause the complete opening or closing of said at least two valves 12, the same electrical energy foreseen is consumed, in a determined time interval, to cause the complete opening or closing of a single valve.

Advantageously, the electronic apparatus 20 is configured so as to drive the total or partial closing of said at least two valves 12 of the device in sequence, or so as to drive the partial and simultaneous closing of all said at least two valves 12 of the device.

Conveniently, for this purpose, the electronic apparatus 20 is configured in such a way as to cause/control the opening/closing of said at least two valves 12 of the device 1 according to one or more one of the following three control modes.

Preferably, the driving modes are programmed at the firmware level in the control unit 21; suitably, according to the programmed driving mode, the control unit 21 generates and sends corresponding control signals 36 to the interface module 22 (in particular, it sends them via the communication bus 28 to the expansion unit 30 which then sends to the selector circuits 31' and 31") so that the driving current coming from one of said two contacts 33' or 33", associated with the power supply unit 19, is diverted to a terminal 32' or 32" of the electric actuator 17 of one of said valves 12 (to then exit from the other terminal and return to the other contact), thus causing the corresponding opening/closing of said valve.

Preferably, the electronic apparatus 20 can be configured to implement all three driving modes described below and to switch from one to the other automatically or following an external command.

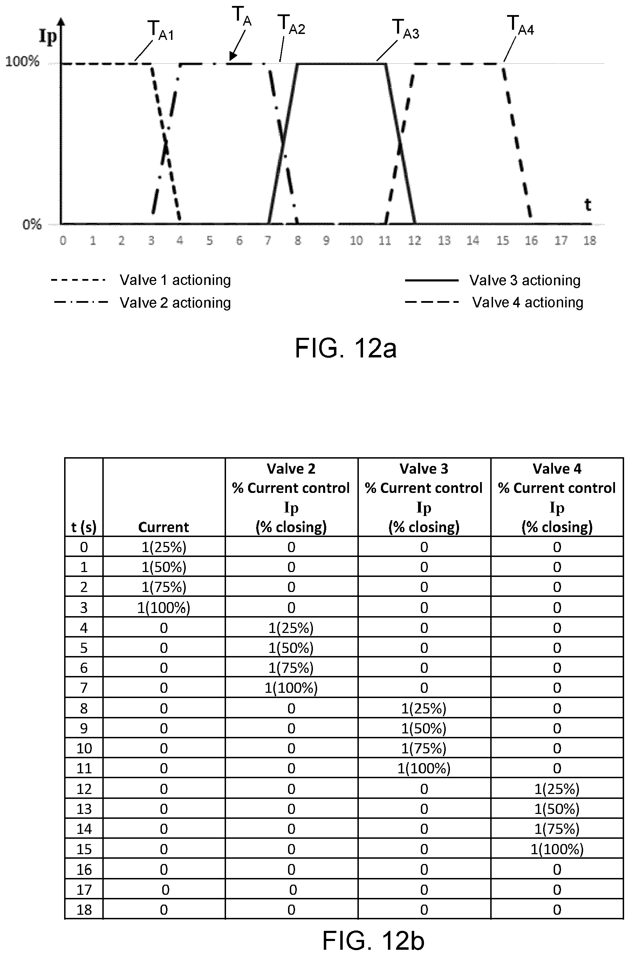

Conveniently, according to a first piloting mode (also called "serial", see fig. 12a and 12b), the electronic apparatus 20 commands in a sequential/serial manner the complete closure (i.e. at 100%) of all the valves 12 of the device 1 but only one valve at a time, while the other valves of the device remain open; in particular, in sequence, each valve 12 is piloted with 100% of the piloting current Ip and this occurs continuously (ie without interruptions) until it reaches its complete closure, while the other valve(s) do not receive substantially any current and therefore remain substantially fully open.

In particular, in sequence and for successive periods of time T_{A}, each valve 12 is (and continues to be) piloted with 100% of the driving current Ip until it causes its total closure, while the other valves do not receive substantially any current. Conveniently, therefore, at each time interval I_{A}, the movable member of a valve is moved until this member causes the complete closure to 100% of the passage section of the valve itself, while the other valves do not receive substantially any current and therefore remain substantially fully open. More in detail, in the case of device 1 with four valves 12, in the first time interval T_{A1} only the first valve is piloted, bringing it to a total closure of 100%, in the following time interval T_{A2} only the second valve is piloted by bringing it at a total closure of 100%, in the subsequent time interval T_{A3} only the third valve is piloted bringing it to a total closure of 100%, in the subsequent time interval T_{A4} only the fourth valve is piloted bringing it to a total closure of 100%.

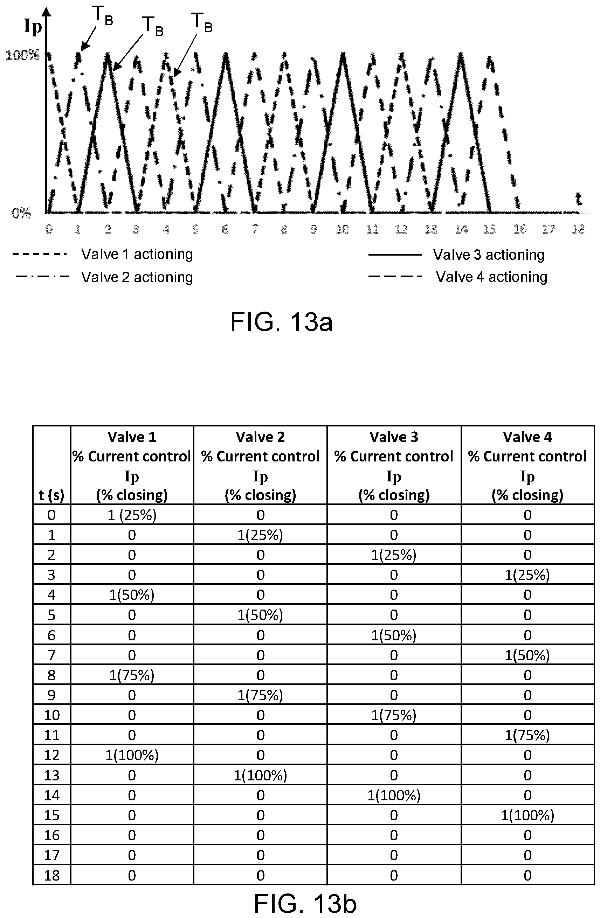

Conveniently, according to a second driving mode (also called "time division multiplexing" or "TDM", see fig. 13a and 13b), the electronic apparatus 20 sequentially/serially commands the partial/gradual closing of all the valves 12 of the device 1 but always driving only one valve at a time. Preferably, the valves 12 are driven sequentially and cyclically.

In particular, in sequence and for successive periods of time and all of the same duration T_{B}, each valve 12 is piloted with 100% of the driving current Ip so as to cause its partial closure; preferably, given a time interval T, all the valves are piloted in sequence and cyclically with 100% of the driving current for a time interval T_{B} equal to T/(N x N) where N is the number of valves in the device. More in detail, therefore, at each time interval T_{B}, the moving part of a single valve is moved so as to increase the closure of the passage section of the valve itself by a partial closure percentage equal to 100/N and, therefore, each valve reaches the total closure in N of time intervals T_{B} while all the valves reach their total closure in N x N of time intervals T_{B}.

Advantageously, moreover, only after all the valves 12 of the device have reached the same partial closing percentage, the partial closing percentage of the other valves is further increased, but always one valve at a time. More in detail, in the case of a device with four valves, in the first time interval T_{B} only the first valve is piloted bringing it to a partial closure of 25%, in the subsequent time interval T_{B} only the second valve is piloted bringing it to a partial closure of 25%, in the subsequent time interval T_{B} only the third valve is piloted bringing it to a partial closure of 25%, in the subsequent time interval T_{B} only the fourth valve is piloted bringing it to a partial closure of 25%, in the subsequent time interval T_{B} only the first valve is returned to pilot, taking it from a partial closure of 25% to a closure of 50%, in the subsequent time interval T_{B} only the second valve is returned to pilot, taking it from a partial closure 25% at a close of 50%, and so on.

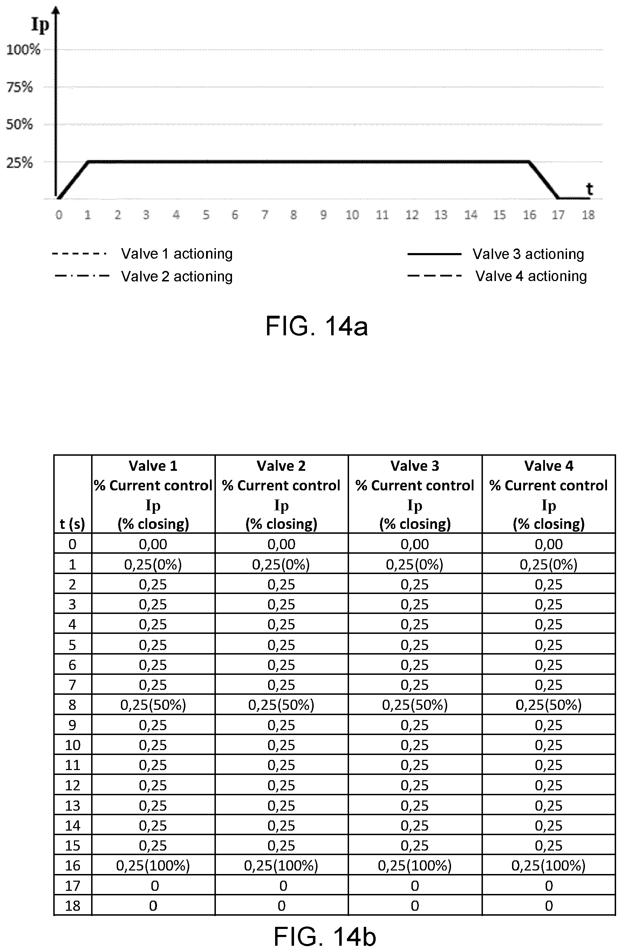

Conveniently, according to a third driving mode (also called "pulse width modulation" or "PWM", see fig. 14a and 14b), the electronic apparatus 20 simultaneously controls the closure of all the valves 12 of the device 1, driving them all together.

In particular, all the valves 12 are piloted simultaneously with a fraction of the piloting current Ip so as to cause their simultaneous partial closure until then the respective total closure of all the valves is reached; in other words, 100% of the driving current is divided among all the valves 12 of the device so as to simultaneously move the respective moving members.

Basically, preferably, the moving parts of all the valves are moved simultaneously but, receiving a fraction of the driving current Ip, the respective speed of movement of the moving parts is lower and, therefore, the respective partial and total closures (which in any case occurs simultaneously for all the valves) is slower but, overall, the complete closure of the gas flow through the valves is the same as obtained with the other two piloting techniques. Conveniently, in the case of a device 1 with four valves 12, all the valves are piloted simultaneously/together with a current fraction equal to 25% so as to cause a sequential closure, preferably gradually with a partial closure step of 25%, of all said valves and this until they reach, always simultaneously, their total closure.

Basically, according to this third driving mode, all the valves 12 of the device 1 are moved together. Conveniently, the third driving mode is carried out at high frequency by exploiting the magnetic induction of the motor which constitutes the electric actuator of each valve 12 and decreasing the *duty cycle,* thus lowering the energy consumption on the single valve and distributing it on the other valves which are activated simultaneously.

Advantageously, in the second and third piloting modes it is possible to manage higher pressures as there are several valves 12 which - albeit partially - are closed at the same time, thus avoiding overloading - as happens in the first piloting mode - the single closed valve.

Conveniently, the various modes of piloting the closure of the valves 12 of the device 1 are aimed at optimizing energy consumption and/or the opening/closing speed of the valves to precisely manage the variation of the gas flow entering/exiting the connecting element 11 of the device. Conveniently, in substance, the electronic apparatus 20 can be configured in such a way as to command the opening/closing of said at least two valves 12 of the device with other suitable current driving modes or algorithms and this in order to optimize energy consumption and/or the closing speed of said valves and/or in order to adapt to the performance of the meter 3 during its operation

Advantageously, the driving modes of the valves 14 are configured to require an amount of electrical energy which is substantially equal to that required to move a single valve 14. In particular, the piloting modes are configured in such a way as to require the same potential difference necessary to move the actuator of a single valve, therefore the same equivalent energy absorbed by the actuator for moving the valve. Therefore, the device 1 can be powered with the same battery - for example a 3.6V (2.5V - 3.7V) primary lithium battery or with a 3.7V (2.3V - 4.2V) rechargeable lithium battery or 3.6V - 7.2V alkaline battery packs - which is generally/usually used to control a single shut-off solenoid valve provided in meters configured to manage maximum flow rates that are less than 10 m³/h.

It is therefore evident that the piloting methods presented here allow to accurately calibrate the flow rate of the gas that exits and/or enters the connecting element 11 of the device 1 and that, therefore, enters/passes through and/or exits the meter 3.

The the present invention also relates to a gas meter 3, of the type capable of managing a maximum gas flow rate equal to or greater than about 16 m³/h, which comprises at least one device 1 as described above and which is completely housed inside the containment casing 2 of the meter 3 and in which the opening 16 of the connecting element 11 of the device 1 is connected, preferably in a sealed manner, with the gas outlet 4 inside the containment casing 2 of said meter 3 and/or with the gas inlet 5 outside the containment casing 2 of said meter 3.

From what has been said it is clear that the device 1 according to the invention is advantageous in that:
- it is highly versatile and, in particular, can be easily adapted according to the internal volume of the meter and according to the used/available valves;
- it is easily and highly customizable since it is possible to change the valve driving modes simply by intervening and modifying the firmware of the control unit, without therefore requiring any intervention at the level of electronic components,
- has an energy consumption substantially corresponding to that required for the movement of a single valve of reduced caliber,
- it allows to control a high flow rate gas flow with components normally used to control lower flow rates, and therefore cheaper and easier to install/control,
- reduces the pressure drops of the gas flow passing through it,
- it is simple to implement as it uses electronic components already used for the control of a single shut-off valve inside meters provided for the management of reduced flows,
- it precisely manages the sequence of actuation of the various reduced-caliber valves provided in the device itself, thus allowing to achieve performances (as required by the regulations) substantially corresponding to those obtained with a single valve of higher caliber.

In particular, unlike the solution of US2012/085434, all the valves 12 of the device are housed inside the containment casing of the same gas meter which is of the type capable of managing a maximum gas flow rate equal to or greater than 16 m³/h (corresponding to or higher than class G10) and are located upstream or downstream of the same/single measurement module 10, thus providing at the output (if the device is connected to the gas inlet in the meter) a same/single gas flow or thus receiving the same/single gas flow at the inlet (if the device is connected to the gas outlet from the meter). Conveniently, for this purpose, unlike the solution of US2012/085434 in which the valves are resting and fixed on the bottom of the containment casing, the connecting element of the device according to the present invention is configured to support the valves in a suspended condition, thus reducing the overall dimensions of the entire device inside the meter in which it is installed/housed.

Furthermore, unlike the solution of US2012/085434, each of the valves 12 of the device according to the present invention has a passage section of about 250-400 mm² and is therefore of the type that is used alone in a gas meter in able to manage a maximum gas flow rate equal to or less than 10 m³/h (ie in G4 or G6 class meters), thus advantageously allowing to control a gas flow with a higher flow rate (such as the one that circulates in a meter - in which the device itself is housed/installed - which is able to manage a maximum gas flow rate equal to or greater than 16 m³/h) with components normally used to control flows with a lower flow rate, and therefore more economical and simple to install/check.

## Claims

1. Device (1) to regulate the passage of gas, of the type suitable for being completely inserted and housed inside the casing (2) of a single gas meter (3) capable of managing a maximum gas flow rate equal to or greater than 16 m³/h, in order to intercept, at least in part, the gas flow at the gas inlet (5) in said meter and/or at the gas outlet (4) in/from said meter, said device comprising:
- a connecting element (11) which is provided with an opening configured to be fluidically connectable, preferably sealed, with said gas inlet (5) and/or with said gas outlet (4) in/from said meter (3), and which is also provided with at least two passages (14) fluidically connected, in parallel with each other, to said opening,
- at least two valves (12) fluidically arranged in parallel with each other, each of said at least two valves (12) being mounted in correspondence with one of said at least two passages (14) and being provided with an electric actuator (17) configured to cause the opening/closing of the corresponding valve,
- an electronic apparatus (20) which is electronically connected with the actuator (17) of each valve (12) to control the movement of said actuator, and therefore the opening/closing of the corresponding valve, said electronic apparatus (20) comprising an electronic control unit (21) which is configured to command and time the opening/closing of said at least two valves (12)
and **characterized in that**:
- said connecting element (11) is configured to support said at least two valves (12) in a suspended condition inside the meter (3), and
- each of said at least two valves (12) is an interception valve having a passage section of about 250-400 mm².

2. Device according to claim 1, **characterized in that**:
- said connecting element (11) is configured to be completely housed inside a gas meter (3) capable of managing a maximum gas flow rate equal to or greater than 16 m³/h,
- each of said at least two valves (12) which is an interception valve of the type which is used alone in a gas meter capable of managing a maximum gas flow rate equal to or less than 10 m³/h.

3. Device according to one or more of the preceding claims, **characterized in that** said connecting element (11) comprises:
- a common manifold (13) which is internally hollow and which, at said opening, can be connected to the gas inlet (5) and/or outlet (4) in/from said meter (3),
- at least two ducts (15), defining said passages (14), which are fluidically connected, in parallel with each other, with said common manifold (13),
- and by the fact that each of said at least two valves (12) is mounted at one end of one of said at least two ducts (15).

4. Device according to one or more of the preceding claims, **characterized in that** said connecting element (11) comprises:
- a common manifold (13) which is internally hollow and which, at said opening, can be connected to the gas inlet (5) and/or outlet (4) in/from said meter (3),
- at least two ducts (15), defining said passages (14), which are fluidically connected, in parallel with each other, with said common manifold (13),
- and which branch off in an angled/inclined way with respect to the direction of development of the manifold (13).

5. Device according to one or more of the preceding claims, **characterized in that**:
- said connecting element (11) comprises a common manifold (13) of tubular shape,
- a valve (12) is mounted at the end of the tubular manifold (13) which is opposite to that which is fluidically connected to the gas inlet (5) and/or outlet (4) in/from said meter (3).

6. Device according to one or more of the preceding claims, **characterized in that** said connecting element (11) is shaped and dimensioned in such a way as to minimize its overall dimensions inside the containment casing (2) of the meter (3) in which it is intended to be inserted into and also in such a way as to minimize the pressure drops of the gas passing through the connecting element itself.

7. Device according to one or more of the preceding claims, **characterized in that** said electronic apparatus (20) comprises a power supply unit which is sized to control a single valve (12).

8. Device according to one or more of the preceding claims, **characterized in that** said electronic control unit (21) is configured to move the actuators of said at least two valves (12), to thus cause the closing/opening of said at least two valves (12), according to a piloting mode which requires an amount of electrical energy which is substantially equal to that necessary to move, in a determined time interval (T), the actuator of a single valve (12).

9. A device according to one or more of the preceding claims, **characterized in that** said electronic apparatus (20) comprises:
- an electronic circuit (24) and a power supply unit (19) suitable for controlling a single valve (12),
- an interface module (22), which is connected at the input with the control unit (21) and with the power supply unit (19), and at the output with the electric actuator (17) of each of said at least two valves (12), said interface module (22) being configured to command, on the basis of control signals (36) generated and sent by said electronic control unit (21), the sending of the driving current supplied by said unit supply to at least one of said actuators (17) of said at least two valves (12).

10. Device according to the preceding claim, **characterized in that** said interface module (22) comprises an input/output expansion (30) to increase the capacity input/output control unit (21).

11. Device according to one or more of the preceding claims, **characterized in that** said electronic apparatus (20) is configured in such a way as to control the sending in sequence, and one at a time, of all the driving current supplied by the power supply unit (19) to only one of the actuators (17) of said at least two valves (12) until the corresponding valve (12) closes completely.

12. Device according to one or more of the preceding claims, **characterized in that** said electronic apparatus (20) is configured so as to cyclically control the sending in sequence, and one at a time, of all the driving current supplied by the power supply unit (19) to only one of the actuators (17) of said at least two valves (12) to thus cause partial closure of the corresponding valve (12).

13. Device according to one or more of the preceding claims, **characterized in that** said electronic apparatus (20) is configured in such a way as to control the sending of a fraction of the driving current supplied by the power supply unit (19) simultaneously with the actuators (17) of all said at least two valves (12) to thus cause their corresponding closure.

14. Gas meter (3), of the type capable of handling a maximum gas flow rate equal to or greater than 16 m³/h, **characterized in that** it includes:
- a device (1) according to one or more of the preceding claims which is completely housed inside the containment casing (2) of said meter (3) and in which the opening of said connecting element (11) of said device is connected, preferably sealed, with the gas inlet (5) inside the containment envelope (2) of said meter (3) and/or with the gas outlet (4) outside the containment casing (2) of said meter (3),
- said at least two valves (12) of said device (1) are housed inside the containment casing (2) of the same meter and are upstream or downstream of the same and single measuring module (10) of which said meter is provided.

15. Meter according to the previous claim, **characterized by** the fact that the power supply unit (19) of said device (1) comprises a battery pack which is the same one provided for powering the measuring module (10) of said meter and/or for powering the communication module of said meter.
